# EUROPEAN PATENT APPLICATION

(11) **EP 4 446 377 A1**
(43) Date of publication of application: **16.10.2024**
(21) Application number: 23747277.4
(22) Date of filing: 20.01.2023
(51) Int. Cl.: C08K 5/29, C08L 67/02, C08K 5/05, C08K 5/053

(54) **POLYBUTYLENEADIPATE TEREPHTHALATE RESIN COMPOSITION, AND METHOD FOR PREPARING SAME**

(30) Priority: 25.01.2022 KR 20220010704
(71) Applicant: LG Chem, Ltd., Yeongdeungpo-gu Seoul 07336 (KR)
(72) Inventor: KIM, Sung-Kyoung, Daejeon 34122 (KR); OH, Seungtaek, Daejeon 34122 (KR); YU, Sung Min, Daejeon 34122 (KR); HWANG, Sung Hoon, Daejeon 34122 (KR)
(74) Representative: Goddar, Heinz J.
(86) International application number: PCT/KR2023/001048
(87) International publication number: WO 2023/146235

(57) **Abstract**

The present invention relates to a polybutylene adipate terephthalate resin composition and a method for preparing the same.

## Description

### [TECHNICAL FIELD]

### CROSS-REFERENCE TO RELATED APPLICATION(S)

This application claims the benefit of Korean Patent Application No. 10-2022-0010704 filed on January 25, 2022 in the Korean Intellectual Property Office, the disclosure of which is incorporated herein by reference in its entirety.

The present invention relates to a polybutylene adipate terephthalate resin composition and a method for preparing the same.

### [BACKGROUND]

Thermoplastic polymer resins have excellent mechanical and chemical properties, and thus are used in various fields, such as drinking water containers, medical applications, food wrapping papers, food containers, vehicle molded articles, and agricultural vinyl.

Thermoplastic polymer resins, particularly polyethylene films or the like, have excellent mechanical properties and are harmless to the human body, but can be continuously deformed by applying heat, so that they are often used as hot sealing bags for food packaging, mulching films for agriculture, and the like. Due to their excellent function and low prices, the consumption amount thereof is increasing each year.

However, in recent years, as interest toward the environment in the country and society is growing, environmental problems such as microplastics, human safety problems such as environmental hormones, and problems such as depletion of natural resources which are raw materials for plastics are emerging.

Particularly in recent years, a phenomenon is known in which discarded plastics, such as polyethylene films, flow into the ocean, and are crushed into very small size microplastics by ocean reflux and sunlight.

Currently, it is known that countless amounts of such microplastics, ranging from billions to tens of billions, are floating on the ocean, which flow into the bodies of sea creatures, accumulate within the ecosystem, and affect the entire food chain.

Therefore, research on alternative materials to thermoplastic plastics that have been used conventionally is necessary. Among these, interest in polybutylene adipate terephthalate (PBAT), which is a biodegradable polymer with flexible properties, is increasing.

PBAT is mostly used as an environmentally friendly consumer film that can replace polyethylene or polyethylene terephthalate, so that its appearance properties are particularly important. However, when the molecular weight of polybutylene adipate terephthalate is increased to improve mechanical properties, a polymer gel may be formed, which may cause a problem of impairing the appearance and reducing mechanical properties such as tensile strength and elongation.

### [DETAILED DESCRIPTION OF THE INVENTION]

### [Technical Problem]

It is an object of the present invention to provide a polybutylene adipate terephthalate resin composition that suppresses gel formation during the preparation process and thus has excellent mechanical properties and appearance properties.

It is another object of the present invention to provide a method for preparing the polybutylene adipate terephthalate resin composition.

### [Technical Solution]

Provided herein is a polybutylene adipate terephthalate resin composition comprising: a polybutylene adipate terephthalate resin, a chain extender, and a gel reducer.

The chain extender and the gel reducer may be present in a dispersed form in the polybutylene adipate terephthalate resin.

According to one embodiment of the invention, the chain extender may include a diisocyanate-based compound. Specific examples of the chain extender include at least one compound selected from the group consisting of hexamethylene diisocyanate, methylene diphenyl diisocyanate, toluene diisocyanate, and isophorone diisocyanate.

According to one embodiment of the invention, the chain extender may be contained in an amount of about 0.1 to about 10 parts by weight, or about 0.1 to about 5 parts by weight, and most preferably about 0.2 to about 3 parts by weight, based on 100 parts by weight of the polybutylene adipate terephthalate.

According to one embodiment of the invention, the gel reducer may include at least one selected from the group consisting of a secondary alcohol-based compound having 2 to 10 carbon atoms and a tertiary alcohol-based compound having 2 to 10 carbon atoms.

Specific examples of the gel reducer include at least one selected from the group consisting of 2,5-dimethyl-2,5-hexanediol, 2-phenyl-2-propanol, 2,3-hexanediol, 2,5-hexanediol, 2-methyl-1-phenyl-2-propanol, 2,4-pentanediol, isosorbide, cyclobutanediol, cyclopentanediol, and cyclohexanediol.

According to one embodiment of the invention, the gel reducer may be contained in an amount of 0.01 to 10 parts by weight, or about 0.01 to about 5 parts by weight, and most preferably about 0.1 to about 1 part by weight, based on 100 parts by weight of the polybutylene adipate terephthalate.

According to one embodiment of the invention, the polybutylene adipate terephthalate resin may have a weight average molecular weight of about 50,000 to about 150,000, or about 100,000 to about 150,000, and most preferably about 130,000 to about 140,000.

According to one embodiment of the invention, the polybutylene adipate terephthalate resin may have a molecular weight distribution value of about 3 to 5, or about 3 to 4.5, and most preferably about 3.5 to 4.

Also provided herein is a method for preparing a polybutylene adipate terephthalate, the method comprising the steps of: a polymerization step of preparing a polymer by condensation polymerization of 1,4-butanediol, adipic acid, and terephthalic acid in the presence of a catalyst; a mixing step of preparing a mixture by charging a chain extender and a gel reducer into the polymer; and a molding step of extrusion-molding the mixture.

At this time, the ratio of the molecular weight after extrusion to the molecular weight before extrusion is about 1 or more, or about 1 to about 2, most preferably about 1.3 to about 1.5, and the molecular weight can be increased by the extrusion process.

The technical terms used herein are for the purpose of describing exemplary embodiments only and is not intended to limit the scope of the invention.

The singular forms "a," "an" and "the" are intended to include the plural forms as well, unless the context clearly indicates otherwise.

It should be understood that the terms "include," "comprise," or "have" are used herein to specify the presence of stated features, numbers, steps, elements, or combinations thereof, but do not preclude the presence or addition of one or more other features, numbers, steps, elements, or combinations thereof.

Further, in the present disclosure, in case where a layer or an element is mentioned to be formed "on" or "above" layers or elements, it means that the layer or element is directly formed on the layers or elements, or it means that other layers or elements may be additionally formed between layers or on a subject or substrate.

Since a variety of modification may be made to the present invention and there may be various forms of the invention, its specific examples are illustrated and will be described in detail below. However, it should be understood that the description is not intended to limit the present invention to the particular forms disclosed, but on the contrary, the intention is to cover all modifications, equivalents, and alternatives falling within the spirit and scope of the invention.

In the present disclosure, polybutylene adipate terephthalate resin or polybutylene adipate terephthalate polymer is used to encompass not only a polymer chain containing repeating units derived from butylene glycol, adipate, and terephthalate, but also a form in which a chain extender is interposed in the middle of a polymer repeating unit and included in a polymer chain through a chain extension reaction.

Hereinafter, the present invention will be described in detail.

As mentioned above, in order to improve the mechanical properties of polybutylene adipate terephthalate, it is necessary to increase the molecular weight of polybutylene adipate terephthalate. However, in the case of increasing the molecular weight of polybutylene adipate terephthalate, a polymer gel may be formed, which may cause problems such as impairing the appearance and reducing mechanical properties such as tensile strength and elongation.

During the preparation of polybutylene adipate terephthalate, it mostly undergoes a polymerization process and an extrusion molding process to increase the molecular weight of the polybutylene adipate terephthalate polymer prepared in the polymerization process.

Polybutylene adipate terephthalate prepared in the polymerization process does not have a very high molecular weight and does not have a high melt viscosity, so that by-products such as gel can be easily filtered out.

However, since the polybutylene adipate terephthalate polymer obtained after the extrusion molding process has a high molecular weight and thus its melt viscosity value increases significantly, there is a problem that it becomes difficult to easily filter out by-products such as gel contained therein.

The present inventors have conducted intensive research in order to solve the above problems, and found that production of gel within the polybutylene adipate terephthalate polymer can be suppressed by a combination of specific compounds. The present invention has been completed on the basis of such findings.

According to one aspect of the present invention, there is provided a polybutylene adipate terephthalate resin composition, comprising a polybutylene adipate terephthalate resin, a chain extender, and a gel reducer.

The chain extender and the gel reducer may be present in a dispersed form in the polybutylene adipate terephthalate resin.

In addition, in the polybutylene adipate terephthalate resin composition, the chain extender and the gel reducer may be present in a form in which they react with each other while being dispersed in the resin composition to form a reaction product of the two.

According to one embodiment of the invention, the chain extender may include a diisocyanate-based compound. Specific examples of the chain extender include one or more compounds selected from the group consisting of hexamethylene diisocyanate, methylenediphenyl diisocyanate, toluene diisocyanate, and isophorone diisocyanate.

According to one embodiment of the invention, the chain extender may be contained in an amount of about 0.1 to about 10 parts by weight, or about 0.1 to about 5 parts by weight, and most preferably about 0.2 to about 3 parts by weight, based on 100 parts by weight of the polybutylene adipate terephthalate.

If the content of the chain extender is too low, there may be a problem that the molecular weight of the polybutylene adipate terephthalate resin is not increased sufficiently, and if the content of the chain extender is too high, there may be a problem that the content of polybutylene adipate terephthalate polymer gel, which is a reaction by-product, is increased.

A diisocyanate-based compound is a typical chain extender used in polyester-based polymers, such as the polybutylene adipate terephthalate of the present invention.

The isocyanate group contained in the diisocyanate-based compound can react with the hydroxy group or carboxyl group at the end of the polyester to create a urethane bond and therefore, in the case of a diisocyanate-based compound containing two or more isocyanate groups in the molecule, the above-mentioned reaction can proceed at both ends to link the ends of the polyester-based polymer, thereby extending the chain and increasing the molecular weight of the polyester-based polymer.

When the urethane group formed in the intermediate process of the above reaction reacts again with the isocyanate group of the chain extender, an allophanate-based compound is formed. However, three or more polymer chains are linked to the nitrogen atoms of this allophanate-based compound, and act as a kind of crosslinking point, and a polymer gel is formed by such crosslinking.

Further, when an isocyanate group reacts with moisture, a compound containing an amine group is formed. When this compound reacts again with a chain extender, a urea bond can be formed. When such urea groups react again with the chain extender, a biuret-based compound is formed, which can also act as crosslinking points where polymer gels are formed.

However, the resin composition according to one aspect of the present invention includes a gel reducer, and thus can prevent formation of the above gel during the chain extension process of the polybutylene adipate terephthalate polymer.

According to one embodiment of the invention, the gel reducer may include at least one selected from the group consisting of a secondary alcohol-based compound having 2 to 10 carbon atoms and a tertiary alcohol-based compound having 2 to 10 carbon atoms.

Specific examples of the gel reduce include at least one selected from the group consisting of 2,5-dimethyl-2,5-hexanediol, 2-phenyl-2-propanol, 2,3-hexanediol, 2,5-hexanediol, 2-methyl-1-phenyl-2-propanol, 2,4-pentanediol, isosorbide, cyclobutanediol, cyclopentanediol, and cyclohexanediol.

The secondary alcohol-based compound or tertiary alcohol-based compound as mentioned above contains a hydroxy group in the molecule, and thus has a moderate degree of reactivity with the isocyanate group in terms of its molecular structure, so that the formation of the allophanate bond described above can be effectively prevented without interfering with the chain extension reaction in which chains of the polybutylene adipate terephthalate polymer are extended during the extrusion process.

According to one embodiment of the invention, the gel reducer may be contained in an amount of 0.01 to 10 parts by weight, or about 0.01 to about 5 parts by weight, and most preferably about 0.1 to about 1 part by weight, based on 100 parts by weight of the polybutylene adipate terephthalate.

If the content of the gel reducer is too high, the polymer chain extension reaction of polybutylene adipate terephthalate is inhibited, which may cause a problem that the molecular weight of polybutylene adipate terephthalate is not sufficiently increased, and rather, depolymerization of polybutylene adipate terephthalate occurs, which may cause a problem that the physical properties of the resin composition is deteriorated. If the content of gel reducer is too low, there may be a problem that the gel reduction effect does not appear.

According to one embodiment of the invention, the polybutylene adipate terephthalate resin may have a weight average molecular weight of about 50,000 to about 150,000, or about 100,000 to about 150,000, and most preferably about 130,000 to about 140,000.

Here, the weight average molecular weight is a value measured by GPC using polystyrene whose molecular weights are 1,000, 10,000, 50,000, 70,000, 100,000, 120,000, 150,000, 170,000, and 200,000, respectively, as a standard material.

When the weight average molecular weight of polybutylene adipate terephthalate resin is too low, there may be a problem that the mechanical properties of the resin composition are deteriorated, and if the weight average molecular weight of the polybutylene adipate terephthalate resin is too high, there may be a problem that the processability of the resin is reduced.

In addition, according to one embodiment of the invention, the molecular weight distribution value of the polybutylene adipate terephthalate resin may be about 3 to 5, or about 3 to 4.5, and most preferably about 3.5 to 4.

If the molecular weight distribution value of the polybutylene adipate terephthalate resin is too low, there is a problem that the processability is reduced, and if the molecular weight distribution value of the polybutylene adipate terephthalate resin is too high, there may be a problem that the mechanical properties of the resin composition are deteriorated.

Also provided herein is a method for preparing a polybutylene adipate terephthalate, the method comprising the steps of: a polymerization step of preparing a polymer by condensation polymerization of 1,4-butanediol, adipic acid, and terephthalic acid in the presence of a catalyst; a mixing step of preparing a mixture by charging a chain extender and a gel reducer into the polymer; and a molding step of extrusion-molding the mixture.

The catalyst is not particularly limited as long as it is widely used as a polyester polymerization catalyst in the technical field to which the present invention belongs.

Specifically, the catalyst may be at least one selected from the group consisting of titanium methoxide, titanium ethoxide, titanium propoxide, titanium isopropoxide, titanium butoxide, and titanium isobutoxide.

For example, the catalyst may be titanium butoxide.

The catalyst may be used in an amount of about 0.001 parts by weight or more, about 0.005 parts by weight or more, or about 0.01 parts by weight or more, and about 10 parts by weight or less, about 5 parts by weight or less, or about 0.1 parts by weight or less, based on 100 parts by weight of adipic acid in the monomer mixture,

If the charging amount of the catalyst is too small, the polymerization time may be longer and the productivity may decrease. Unlike the same, if the charging amount of the catalyst is too large, the polymerization time may be shortened, but the possibility of discoloration of the resulting polybutylene adipate terephthalate increases, which may cause a problem that separate additives such as heat stabilizers must be added in proportion to the charging amount of the catalyst.

Further, the 1,4-butanediol may be used in an amount of about 150 to about 250 parts by weight, or about 180 parts by weight to about 220 parts by weight, based on 100 parts by weight of adipic acid in the monomer mixture.

This is the total amount of 1,4-butanediol required for the synthesis of polybutylene adipate terephthalate.

### Polymerization process

A prepolymer refers to a polymer with a relatively low degree of polymerization, in which the polymerization reaction is stopped at an intermediate stage in order to facilitate molding.

In one embodiment, the prepolymer corresponds to a polymer with a relatively low degree of polymerization, which is prepared by esterification reaction of a monomer mixture containing 1,4-butanediol, adipic acid, and terephthalic acid in the presence of the catalyst.

According to one embodiment of the present invention, initial polymer chains may form around the catalyst surface, with the catalyst as the center.

Specifically, the monomer mixture may include about 50 to about 150 parts by weight of terephthalic acid based on 100 parts by weight of adipic acid in the monomer mixture.

Terephthalic acid may affect the crystallinity of polymers due to its aromatic ring structure, and may achieve both excellent mechanical properties and biodegradability of the polymer prepared within the above charging range.

For example, the monomer mixture may include about 80 to about 120 parts by weight of terephthalic acid based on 100 parts by weight of adipic acid in the monomer mixture.

Moreover, in the step of preparing the prepolymer, the esterification reaction may be performed by adding to the monomer mixture 0.1 to 1 part by weight of a crosslinking agent or a branching agent based on 100 parts by weight of adipic acid in the monomer mixture.

When an esterification reaction is performed by adding a crosslinking agent, an internally crosslinked prepolymer is prepared, and the mechanical properties of the resin composition can be improved.

The crosslinking agent is a low molecular weight compound containing 3 or more hydroxy groups in the molecule, or 3 or more carboxy groups in the molecule, and an example thereof may be glycerol, pentaerythritol, citric acid, or the like. For example, the crosslinking agent may be pentaerythritol.

The step of preparing the prepolymer may be performed in a temperature range of from about 150 to about 350°C for about 10 to about 120 minutes.

In the above temperature and time ranges, the prepolymer can be prepared while maintaining uniform dispersion of the organic filler.

For example, the step of preparing the prepolymer may be performed in a temperature range of about 150°C or more, about 170°C or more, about 190°C or more, or about 210°C or more, and about 350°C or less, about 320°C or less, about 290°C or less, or about 250°C or less. Further, this step may be performed in a time range of about 10 minutes or more, about 15 minutes or more, about 20 minutes or more, or about 25 minutes or more, and about 120 minutes or less, about 90 minutes or less, about 60 minutes or less, or about 40 minutes or less.

In the step of preparing the prepolymer, nitrogen gas can be injected. Specifically, at the time of injection of nitrogen gas, water generated as a by-product may be quickly removed, thereby suppressing the reverse reaction caused by water, improving the conversion rate of monomers, and increasing the molecular weight of the polymer chain.

For example, nitrogen gas can be injected at about 0.001 ml/min or more, about 0.01 ml/min or more, about 0.02 ml/min or more, or about 0.05 ml/min or more, and about 100 ml/min or less, about 50 ml/min or less, about 10 ml/min or less, or about 5 ml/min or less.

When polymerizing the prepolymer, about 0.001 to about 10 parts by weight of catalyst may be further charged based on 100 parts by weight of adipic acid in the monomer mixture.

The initially charged catalyst is highly likely to decrease in activity in the step of preparing a prepolymer. For example, titanium, which is the central metal component of the catalyst, may react with water, which is a by-product of the ester reaction, to form titanium oxide, and the functional group present in the above-mentioned organic filler molecule may be substituted in the alkoxide moiety of titanium alkoxide. Therefore, it may be desirable to further charge a catalyst immediately before the reaction.

For example, the further charged catalyst may be used in an amount of about 0.001 parts by weight or more, about 0.005 parts by weight or more, or about 0.01 parts by weight or more, and about 10 parts by weight or less, about 5 parts by weight or less, or about 0.1 parts by weight or less, based on 100 parts by weight of adipic acid in the monomer mixture.

After the catalyst is further charged, a heat stabilizer can be charged. When the heat stabilizer is charged, discoloration of the final PBAT can be suppressed.

Specifically, about 0.001 to about 1 part by weight of the heat stabilizer may be charged based on 100 parts by weight of adipic acid in the monomer mixture.

The method may include a step of raising the temperature of the reactor containing the prepolymer during the polymerization of the prepolymer until the temperature reaches a range of about 150 to about 350°C; a step of reducing the pressure of the reactor after raising the temperature until the pressure reaches about 0.1 to about 0.00001 atm; and a step of maintaining the pressure and temperature after reducing the pressure, and terminating the reaction after a lapse of about 2 to about 8 hours.

For example, the temperature of the reactor containing the prepolymer may be raised until reaching a temperature range of about 150°C or more, about 170°C or more, about 190°C or more, or about 210°C or more, and about 350°C or less, about 320°C or less, about 290°C or less, or about 250°C or less.

One to ten minutes after reaching the above temperature range, the pressure of the reactor may be reduced until it reaches a pressure range of about 0.00001 atm or more, 0.00005 atm or more, about 0.0001 atm or more, or about 0.0002 atm or more, and about 0.1 atm or less, about 0.05 atm or less, about 0.03 atm or less, or about 0.01 atm or less.

After reducing the pressure, the reaction can be performed while maintaining the pressure and temperature, and the reaction can be terminated after about 2 hours or more, about 2.2 hours or more, about 2.4 hours or more, or about 3 hours or more, and about 8 hours or less, about 7.5 hours or less, about 7 hours or less, or about 6 hours has been reached after the start of the reaction.

Further, a chain extender and a gel reducer are charged into the polymer obtained by the above method to prepare a mixture.

During the preparation of the mixture, methods such as pulverizing the polymer obtained above and then mixing it with a chain extender and a gel reducer may be used. The mixing method may be a general method used for the preparation of blended resins in the technical field to which this invention belongs. In particular, the general method used for charging the polymer obtained for polymerization into an extrusion molding machine can be used.

Then, the mixture is extrusion-molded.

The extruder used at this time can be applied in different forms depending on the conditions. Generally, a twin screw extruder type is preferred as it is advantageous for mixing and molding.

If the amount of resin composition charged into the extruder is too high or the molecular weight of the resin is too high, the extrusion pressure increases, and overload occurs, which not only affects the physical properties of the extruded resin molded product, but also may cause mechanical problems. Therefore, it is desirable to keep the extrusion pressure as low as possible in consideration of the discharge amount and residence time.

The diameter and size of the extruder can be determined depending on the extrusion conditions such as discharge amount. A ratio between screw length and outer diameter (L/D) may be appropriately about 40 or more, or about 40 to about 60, and most preferably about 40 to about 50.

Further, the extrusion temperature may be about 160°C to about 250°C, preferably about 180°C to about 220°C. If the extrusion temperature is too high, the molecular weight may decrease due to thermal decomposition of the polymer, and if the extrusion temperature is too low, the melting efficiency of the polymer may decrease.

At this time, the ratio of the molecular weight after extrusion to the molecular weight before extrusion is about 1 or more, or about 1 to about 2, most preferably about 1.3 to about 1.5, and the molecular weight can be increased by the extrusion process.

### [Advantageous Effects]

A polybutylene adipate terephthalate resin composition according to one embodiment of the present invention suppresses gel formation during the preparation process and thus has excellent mechanical properties and appearance properties.

### [DETAILED DESCRIPTION OF THE EMBODIMENTS]

Hereinafter, the actions and effects of the present invention will be described in more detail with reference to the specific exemplary embodiments of the invention. However, these exemplary embodiments are for illustrative purposes only, and the scope of the present invention is not intended to be limited thereby.

### <Preparation Example>

1220g of 1,4-butanediol, 606g of adipic acid, 634g of terephthalic acid, 0.77g of pentaerythritol, and 1.0mmol of titanium butoxide were charged into a polymerization reactor, maintained at about 230°C, and reacted under a nitrogen atmosphere for about 4 hours to prepare a prepolymer.

Once the prepolymer was prepared, triethylphosphonoacetate as a heat stabilizer was charged so that the phosphorus(P) atom content in the resulting polymer was about 60 ppm, and then stirred for about 5 minutes, so that the heat stabilizer was uniformly dispersed in the polymer.

After that, about 0.5 mmol of titanium butoxide was further charged into a reactor, the temperature was raised to about 245°C, and once the temperature of the reactor reached about 245°C, polycondensation was performed while reducing pressure.

After confirming that the torque value of the reactor reached about 100 Ncm, the reaction was stopped, and polybutylene adipate terephthalate polymer was obtained. (Mw: 93,600)

### Example 1

The polybutylene adipate terephthalate polymer obtained in the Preparation Example was freeze-dried and pulverized, and then, based on 100 parts by weight of the polybutylene adipate terephthalate, about 0.75 parts by weight of hexamethylene diisocyanate as a chain extender and about 0.5 equivalents of 2-phenyl-2-propanol as a gel reducer were charged into a mini twin-screw extruder, and extruded to obtain a pellet shaped resin composition.

### Example 2

The polybutylene adipate terephthalate polymer obtained in the Preparation Example was freeze-dried and pulverized, and then, based on 100 parts by weight of the polybutylene adipate terephthalate, about 0.75 parts by weight of hexamethylene diisocyanate as a chain extender and about 0.2 equivalents of 2,5-dimethyl-2,5-hexanediol as a gel reducer were charged into a mini twin-screw extruder, and extruded to obtain a pellet shaped resin composition.

### Example 3

The polybutylene adipate terephthalate polymer obtained in the Preparation Example was freeze-dried and pulverized, and then, based on 100 parts by weight of the polybutylene adipate terephthalate, about 0.75 parts by weight of hexamethylene diisocyanate as a chain extender and about 0.2 equivalents of 2,3-hexanediol as a gel reducer were charged into a mini twin-screw extruder, and extruded to obtain a pellet shaped resin composition.

### Reference Example 1

The polybutylene adipate terephthalate polymer obtained in the Preparation Example was freeze-dried and pulverized, and then, based on 100 parts by weight of the polybutylene adipate terephthalate, about 0.75 parts by weight of hexamethylene diisocyanate as a chain extender and about 1.0 equivalent of 2,5-dimethyl-2,5-hexanediol as a gel reducer were charged into a mini twin-screw extruder, and extruded to obtain a pellet shaped resin composition.

### Comparative Example 1

The polybutylene adipate terephthalate polymer obtained in the Preparation Example was freeze-dried and pulverized, and then, based on 100 parts by weight of the polybutylene adipate terephthalate, about 0.75 parts by weight of hexamethylene diisocyanate as a chain extender was charged into a mini twin-screw extruder, and extruded to obtain a pellet shaped resin composition.

### Comparative Example 2

The polybutylene adipate terephthalate polymer obtained in the Preparation Example was freeze-dried and pulverized, and then, based on 100 parts by weight of the polybutylene adipate terephthalate, about 0.5 parts by weight of hexamethylene diisocyanate as a chain extender was charged into a mini twin-screw extruder, and extruded to obtain a pellet shaped resin composition.

### Comparative Example 3

The polybutylene adipate terephthalate polymer obtained in the Preparation Example was freeze-dried and pulverized, and then, based on 100 parts by weight of the polybutylene adipate terephthalate, about 0.75 parts by weight of hexamethylene diisocyanate as a chain extender and about 0.2 equivalent of glycerol as a gel reducer was charged into a mini twin-screw extruder, and extruded to obtain a pellet shaped resin composition.

### Determination of molecular weight and molecular weight distribution

Molecular weight and molecular weight distribution were measured using a gel permeation chromatography (GPC, Waters PL-GPC220). The measurement conditions are as follows, and the measured values are summarized in the table below.
Column used: Polymer Laboratories PLgel MIX-B 300mm
Evaluation temperature: 160°C
Solvent: 1,2,4-trichlorobenzene
Flow rate: 1mL/min
Sample: 200 *µ*ℓ supplied at 10mg/10mL concentration
Calibration curve: Use of polystyrene standards (9 types: molecular weight: 2,000 / 10,000 / 30,000 / 70,000 / 200,000 / 700,000 / 2,000,000 / 4,000,000 / 10,000,000)

### Determination of gel content

The pellet-shaped resin compositions prepared in the Examples, Reference Example, and Comparative Examples were charged into a blown extrusion molding machine, and blow-molded at a temperature of 160°C and a BUR of 1.7.

The film was made in a thickness of about 50 *µ*m, cut into a size of about 5 cm in width and height to make a measurement sample, and then the number of gels present in the film was measured using a CCD camera. The gel showed a round shape, and its size was generally distributed between 20 and 500 *µ*m. The measured values of the number of gels were calculated based on Comparative Example 1, and the ratios thereof were calculated and summarized in the table below.

**[Table 1]**

| | Chain extender (part by weight) | Gel reducer (charging equivalence ratio relative to chain extender) | Before extrusion (Mw) | After extrusion (Mw) | Molecula r weight distributi on | Gel measur ed value |
|---|---|---|---|---|---|---|
| Example 1 | 0.75 | 0.5 | 98,900 | 171,000 | 4.02 | 0.57 |
| Example 2 | 0.75 | 0.2 | 99,900 | 168,000 | 4.08 | 0.79 |
| Example 3 | 0.75 | 0.2 | 99,900 | 144,000 | 4.05 | 0.65 |
| Reference Example | 0.75 | 1.0 | 117,000 | 157,000 | 4.09 | 0.71 |
| Comparative Example 1 | 0.75 | 0 | 99,900 | 166,000 | 4.06 | 1 |
| Comparative Example 2 | 0.5 | 0 | 99,900 | 136,000 | 3.79 | - |
| Comparative Example 3 | 0.75 | Glycerol 0.2 | 93,600 | 114,000 | 3.38 | - |

Referring to Table, it can be clearly confirmed that the resin composition according to an embodiment of the present invention show no significant change in molecular weight value and also significantly reduces gel generation during extrusion molding as compared to Comparative Examples.

Therefore, it is considered that the polybutylene adipate terephthalate resin composition according to an embodiment of the present invention has very excellent mechanical properties and appearance properties when applied to environmentally friendly consumer film and other applications.

## Claims

1. A polybutylene adipate terephthalate resin composition comprising:
a polybutylene adipate terephthalate resin,
a chain extender, and
a gel reducer.

2. The polybutylene adipate terephthalate resin composition according to claim 1, wherein:
the chain extender includes a diisocyanate-based compound.

3. The polybutylene adipate terephthalate resin composition according to claim 1, wherein:
the chain extender is contained in an amount of 0.1 to 10 parts by weight based on 100 parts by weight of the polybutylene adipate terephthalate.

4. The polybutylene adipate terephthalate resin composition according to claim 1, wherein:
the gel reducer includes at least one selected from the group consisting of a secondary alcohol-based compound having 2 to 10 carbon atoms and a tertiary alcohol-based compound having 2 to 10 carbon atoms.

5. The polybutylene adipate terephthalate resin composition according to claim 1, wherein:
the gel reducer includes at least one selected from the group consisting of 2,5-dimethyl-2,5-hexanediol, 2-phenyl-2-propanol, 2,3-hexanediol, 2,5-hexanediol, 2-methyl-1-phenyl-2-propanol, 2,4-pentanediol, isosorbide, cyclobutanediol, cyclopentanediol, and cyclohexanediol.

6. The polybutylene adipate terephthalate resin composition according to claim 1, wherein:
the gel reducer is contained in an amount of 0.01 to 10 parts by weight based on 100 parts by weight of the polybutylene adipate terephthalate.

7. The polybutylene adipate terephthalate resin composition according to claim 1, wherein:
the polybutylene adipate terephthalate resin has a weight average molecular weight of 50,000 to 150,000.

8. The polybutylene adipate terephthalate resin composition according to claim 1, wherein:
the polybutylene adipate terephthalate resin has a molecular weight distribution value of 3 to 5.

9. A method for preparing a polybutylene adipate terephthalate, the method comprising the steps of:
a polymerization step of preparing a polymer by condensation polymerization of 1,4-butanediol, adipic acid, and terephthalic acid in the presence of a catalyst;
a mixing step of preparing a mixture by charging a chain extender and a gel reducer into the polymer; and
a molding step of extrusion-molding the mixture.
